# EUROPEAN PATENT APPLICATION

(11) **EP 4 484 489 A1**
(43) Date of publication of application: **01.01.2025**
(21) Application number: 23759757.0
(22) Date of filing: 13.02.2023
(51) Int. Cl.: C08L 21/00, C08C 4/00, C08F 220/10, C08F 220/44, C08K 5/13, C08K 5/3475

(54) **CROSSLINKABLE RUBBER AND METHOD FOR PRODUCING SAME, AND RUBBER CROSSLINKED PRODUCT**

(30) Priority: 24.02.2022 JP 2022026975
(71) Applicant: Zeon Corporation, Tokyo 100-8246 (JP)
(72) Inventor: SHIBUYA, Masanori, Tokyo 100-8246 (JP); SAKAKIDA, Hiroshi, Tokyo 100-8246 (JP)
(74) Representative: Maiwald GmbH
(86) International application number: PCT/JP2023/004818
(87) International publication number: WO 2023/162754

(57) **Abstract**

Provided is a cross-linkable rubber comprising a rubber component having a carboxyl group as a cross-linkable group, wherein when the cross-linkable rubber is cross-linked to produce a cross-linked rubber before high temperature storage and the cross-linked rubber before high temperature storage is subjected to high temperature storage at 150°C for 1008 hours to produce a cross-linked rubber after high temperature storage, the sum of intensities within a region of 0 to 8 msec in relaxation time obtained by pulse NMR analysis performed on the cross-linked rubber after high temperature storage is preferably 19.0 or less.

## Description

### TECHNICAL FIELD

The present invention relates to a cross-linkable rubber and a method for producing the same, and a cross-linked rubber.

### BACKGROUND ART

Cross-linkable rubbers such as acrylic rubbers and nitrile rubbers are widely used in automobile-related fields and the like, taking advantage of their excellent heat resistance, oil resistance, ozone resistance, and the like.

For example, Patent Document 1 proposes an acrylic rubber containing a residual coagulant in an amount of 10 ppm by weight or more and 10,000 ppm by weight or less. The object of the technique according to Patent Document 1 is to provide an acrylic rubber having an excellent compression set resistance and suitably used in applications to various materials for automobiles such as sealing materials, hose materials, vibration insulators, tubing materials, belt materials, and boots materials.

On the other hand, when cross-linkable rubbers such as acrylic rubbers and nitrile rubbers are used for sealing materials, in particular, in gasket applications, high cold resistance and excellent compressive stress relaxation properties (i.e., high residual stress after a predetermined time has passed when they are compressed under a predetermined temperature condition and a predetermined compressibility ratio) are required. Although conventional cross-linkable rubbers such as the acrylic rubber disclosed in Patent document 1 have an excellent property in compression set resistance, there is a problem that the compressive stress relaxation properties are not necessarily sufficient.

### RELATED ART DOCUMENT

### PATENT DOCUMENT

PATENT DOCUMENT 1: WO 2018/079783

### SUMMARY OF THE INVENTION

### PROBLEMS TO BE SOLVED BY THE INVENTION

The present invention has been made in consideration of such circumstance. An object of the present invention is to provide a cross-linkable rubber that is capable of providing a cross-linked rubber having high cold resistance and excellent compressive stress relaxation properties.

### MEANS FOR SOLVING PROBLEMS

The present inventors, who have conducted extensive research to solve the above problems, have focused on the relaxation time obtained by pulse NMR analysis performed on a cross-linked rubber after high temperature storage when a cross-linkable rubber is cross-linked to produce a cross-linked rubber before high temperature storage and the cross-linked rubber before high temperature storage is subjected to high temperature storage at 150°C for 1008 hours to produce the cross-linked rubber after high temperature storage, and have found that high cold resistance and excellent compressive stress relaxation properties (i.e., high residual stress after a predetermined time has passed when it is compressed under a predetermined temperature condition and a predetermined compressibility ratio) can be achieved by allowing the sum of intensities within a region of 0 to 8 msec in relaxation time to fall within a predetermined range. This finding has led to the completion of the present invention.

Specifically, the present invention provides a cross-linkable rubber comprising a rubber component having a carboxyl group as a cross-linkable group,
wherein when the cross-linkable rubber is cross-linked to produce a cross-linked rubber before high temperature storage and the cross-linked rubber before high temperature storage is subjected to high temperature storage at 150°C for 1008 hours to produce a cross-linked rubber after high temperature storage, the sum of intensities within a region of 0 to 8 msec in relaxation time obtained by pulse NMR analysis performed on the cross-linked rubber after high temperature storage is preferably 19.0 or less.

In the cross-linkable rubber according to the present invention, the sum of intensities within a region of 0 to 8 msec in relaxation time obtained by pulse NMR analysis performed on the cross-linked rubber after high temperature storage is preferably 17.0 to 18.0.

In the cross-linkable rubber according to the present invention, when the cross-linkable rubber is cross-linked to produce a cross-linked rubber before high temperature storage, the sum of intensities within a region of 0 to 8 msec in relaxation time obtained by pulse NMR analysis performed on the cross-linked rubber before high temperature storage is preferably 19.0 or less.

In the cross-linkable rubber according to the present invention, the sum of intensities within a region of 0 to 8 msec in relaxation time obtained by pulse NMR analysis performed on the cross-linked rubber before high temperature storage is preferably 15.0 to 17.0.

In the cross-linkable rubber according to the present invention, conditions for performing the pulse NMR analysis can be as follows:
Measurement time: 0 to 8 msec
Interval between the 90-degree pulse and the 180-degree pulse in initial measurement: 0.04 msec
Interval between the 90-degree pulse and the 180-degree pulse in final measurement: 4 msec
Total number of measurements: 30 times
Timing of n-th measurement, Tₙ: Tₙ₋₁ + 0.08 × (DF)ⁿ⁻¹ + C [msec] (where Tₙ [msec] refers to the timing of the n-th measurement represented by a time elapsed from the start of the measurement, T₀ = 0 [msec], DF refers to a coefficient that defines the timing of measurement calculated by a formula "DF = exp (1/(total number of measurements - 1) * ln (interval between 90-degree pulse and 180-degree pulse in final measurement/interval between 90-degree pulse and 180-degree pulse in initial measurement))", and C refers to a correction factor [msec]).

In the cross-linkable rubber according to the present invention, the rubber component is preferably a carboxyl group-containing acrylic rubber.

In the cross-linkable rubber according to the present invention, the carboxyl group-containing acrylic rubber preferably contains 50 to 99.9% by weight of an (meth)acrylic acid ester monomer unit and 0.1 to 10% by weight of a carboxyl group-containing monomer unit.

In the cross-linkable rubber according to the present invention, the rubber component is preferably a carboxyl group-containing nitrile rubber.

In the cross-linkable rubber according to the present invention, the carboxyl group-containing nitrile rubber preferably contains 5 to 60% by weight of an α,β-ethylenically unsaturated nitrile monomer unit, 10 to 80% by weight of a conjugated diene monomer unit, 1 to 30% by weight of a carboxyl group-containing monomer unit, and 10 to 50% by weight of an α,β-ethylenically unsaturated monocarboxylic acid ester monomer unit.

In the cross-linkable rubber according to the present invention, the cross-linkable rubber preferably contains a bisphenol antioxidant and/or a benzimidazole antioxidant.

In addition, the present invention provides a cross-linked rubber obtained by cross-linking the cross-linkable rubber described above.

Furthermore, the present invention provides a method for producing the cross-linkable rubber described above, the method comprising a step of kneading the rubber component with the bisphenol antioxidant and/or the benzimidazole antioxidant using a kneader.

Alternatively, the present invention provides a method for producing the cross-linkable rubber described above, the method comprising a step of adding the bisphenol antioxidant and/or the benzimidazole antioxidant to a latex containing the rubber component, and thereafter causing coagulation of the latex.

### EFFECTS OF THE INVENTION

The present invention can provide a cross-linkable rubber which is capable of providing a cross-linked rubber having high cold resistance and excellent compressive stress relaxation properties.

### BRIEF DESCRIPTION OF DRAWING

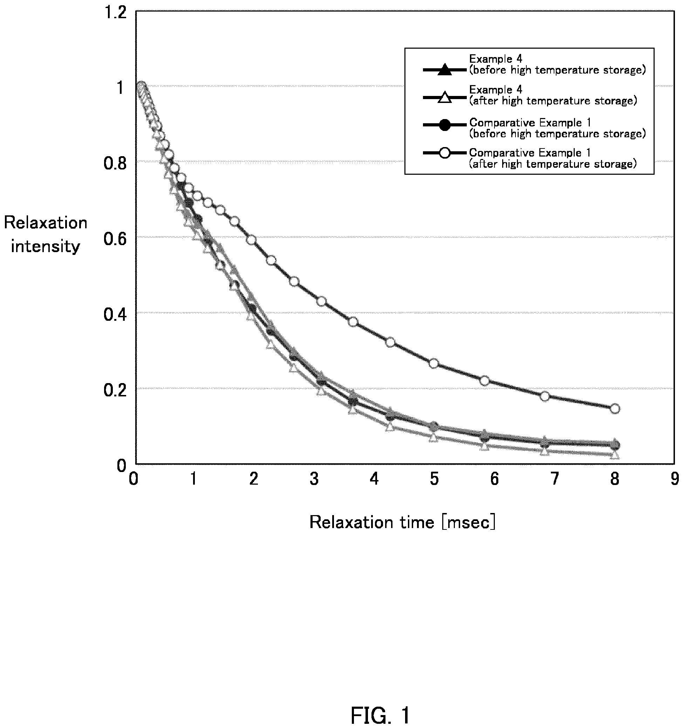

Fig. 1 is a graph showing the relation between relaxation time and relaxation intensity obtained by pulse NMR analysis in Examples and Comparative Examples.

### DESCRIPTION OF EMBODIMENTS

The cross-linkable rubber according to the present invention comprises a rubber component having a carboxyl group as a cross-linkable group, wherein when the cross-linkable rubber is cross-linked to produce a cross-linked rubber before high temperature storage and the cross-linked rubber before high temperature storage is subjected to high temperature storage at 150°C for 1008 hours to produce a cross-linked rubber after high temperature storage, the sum of intensities within a region of 0 to 8 msec in relaxation time obtained by pulse NMR analysis performed on the cross-linked rubber after high temperature storage is 19.0 or less.

The cross-linkable rubber according to the present invention is not particularly limited as long as the cross-linkable rubber contains a rubber component having a carboxyl group as a cross-linkable group.

When the cross-linkable rubber according to the present invention is cross-linked to produce a cross-linked rubber, and the cross-linked rubber is subjected to high temperature storage at 150°C for 1008 hours to produce a cross-linked rubber after high temperature storage, the sum of intensities within a region of 0 to 8 msec in relaxation time obtained by pulse NMR analysis performed on the cross-linked rubber after high temperature storage is 19.0 or less.

The pulse NMR analysis is performed using a pulse NMR analyzer, and is a method for obtaining ¹H nuclear magnetic relaxation time of a cross-linked rubber after high temperature storage as a target for analysis by applying predetermined pulses to the cross-linked rubber after high temperature storage used as a target for analysis and detecting signals responding to the pulses. In pulse NMR analysis, a free induction decay curve can be obtained as responses to the pulses. When the sum of intensities within a region of 0 to 8 msec in relaxation time is calculated from the free induction decay curve obtained above, the present invention is constituted such that the sum of intensities within a region of 0 to 8 msec in relaxation time is 19.0 or less.

Fig. 1 is a graph showing the relation between relaxation time and relaxation intensity obtained by pulse NMR analysis in Examples and Comparative Examples. In total, Fig. 1 shows 4 data sets from measurement data in Example 4 and measurement data in Comparative Example 1 (describe below) each including a data set from measurement on a cross-linked rubber before high temperature storage at 150°C for 1008 hours and a data set from measurement on a cross-linked rubber after high temperature storage at 150°C for 1008 hours. In Fig. 1, the four data sets are denoted as Example 4 (before high temperature storage), Example 4 (after high temperature storage), Comparative Example 1 (before high temperature storage), and Comparative Example 1 (after high temperature storage).

As shown in Fig. 1, in pulse NMR analysis, the relaxation intensity corresponding to the signal responding to pulses decreases from the start of the measurement as the relaxation time increases. In the present invention, the sum of intensities within a region of 0 to 8 msec in relaxation time as shown in Fig. 1 is calculated. In the calculation, as shown in Fig. 1, the sum of intensities within a region of 0 to 8 msec in relaxation time is calculated using standardized relaxation intensities obtained by standardization where the relaxation intensity at the start of the measurement is regarded as 1. Specifically, a relaxation intensity at each relaxation time is divided by the relaxation intensity at a relaxation time of 0 to standardize the relaxation intensity, and the standardized relaxation intensity is used.

The present inventors have found that when the sum of intensities within a region of 0 to 8 msec in relaxation time obtained by pulse NMR analysis performed after a cross-linked rubber is formed from a cross-linkable rubber and subjected to high temperature storage at 150°C for 1008 hours is controlled to be less than a predetermined value, cold resistance and compressive stress relaxation properties can be improved, and thus a cross-linked rubber having high cold resistance and excellent compressive stress relaxation properties can be obtained. Specifically, the sum of intensities within a region of 0 to 8 msec in relaxation time obtained by pulse NMR analysis performed after a cross-linked rubber is formed from a cross-linkable rubber and subjected to high temperature storage at 150°C for 1008 hours is allowed to fall within a range from 19.0 or less, preferably within a range from 17.0 to 19.0, more preferably within a range from 17.0 to 18.0. When this value becomes too large, compressive stress relaxation properties become worse. For example, as is apparent from the graph in Fig. 1, compared to Example 4 (after high temperature storage), Comparative Example 1 (after high temperature storage) shows a relatively slow decrease in relaxation intensity as the relaxation time increases, and thus the sum of intensities becomes larger, in fact, becomes more than 19.0, which results in decreased compressive stress relaxation properties.

In the present invention, it is sufficient that the sum of intensities within a region of 0 to 8 msec in relaxation time after a cross-linked rubber is formed from the cross-linkable rubber and subjected to high temperature storage at 150°C for 1008 hours falls within the ranges above. However, when pulse NMR analysis is performed before high temperature storage at 150°C for 1008 hours, that is, when pulse NMR analysis is performed on a cross-linked rubber formed from the cross-linkable rubber before high temperature storage, the sum of intensities within a region of 0 to 8 msec in relaxation time is preferably 19.0 or less, more preferably 15.0 to 17.0. When the sum of intensities before high temperature storage within a region of 0 to 8 msec in relaxation time is within the ranges above, compressive stress relaxation properties can be further improved. In addition, in the present invention, the difference between the sum of intensities within a region of 0 to 8 msec in relaxation time after high temperature storage and the sum of intensities within a region of 0 to 8 msec in relaxation time before high temperature storage (the sum of intensities after high temperature storage - the sum of intensities before high temperature storage) is preferably 1.5 or less, more preferably 1 or less, still more preferably 0.1 to 0.8.

In the present invention, as specific methods and conditions for performing the pulse NMR analysis, those described in Examples described later can be used. In addition, in the present invention, when pulse NMR analysis is performed, the cross-linked rubber as the target for analysis may be analyzed in a state where the cross-linked rubber contains a filler such as carbon black and the like, or may be analyzed in a state where the cross-linked rubber does not contain a compounding agent. However, when the analysis is performed in a state where a compounding agent is not contained, pulse NMR analysis can be relatively easily performed. On the other hand, according to the findings of the present inventors, in pulse NMR analysis, data derived from a rubber component can be obtained irrespective of the presence/absence of a compounding agent, and thus almost the same measurement data can be obtained irrespective of the presence/absence of a filler such as carbon black and the like.

In the present invention, when pulse NMR analysis is performed, a cross-linkable rubber is cross-linked to form a cross-linked rubber. The conditions for forming the cross-linked rubber are not particularly limited as long as the rubber component contained in the cross-linkable rubber is sufficiently cross-linked. For example, cross-linking can be performed under a condition where about 0.4 to 0.5 molar equivalents of a cross-linking agent relative to carboxyl groups as cross-linkable groups contained in the rubber component in the cross-linkable rubber are compounded, the cross-linking temperature is generally 130 to 250°C, preferably 150 to 240°C, and the cross-linking time is generally 1 minute to 10 hours, preferably 2 minutes to 5 hours, for example. In this procedure, secondary cross-linking can be performed. Furthermore, although the cross-linking agent used in this procedure is not particularly limited, polyvalent amine compounds and carbonates thereof can be suitably used. Specific examples of the polyvalent amine compounds and carbonates thereof are described later.

Although specific conditions for cross-linking is not particularly limited, for example, when hexamethylenediamine carbamate is used as the cross-linking agent, typical methods for forming the cross-linked rubber includes a method that is carried out under conditions where the amount of hexamethylenediamine carbamate is 0.46 molar equivalents relative to the amount of carboxyl groups contained in the rubber component and a pressure of 10 MPa is applied at 230°C for 3 minutes.

In the present invention, although the method for allowing the sum of intensities within a region of 0 to 8 msec in relaxation time after a cross-linked rubber is formed from the cross-linkable rubber and subjected to high temperature storage at 150°C for 1008 hours to fall within the ranges above is not particularly limited, the following methods are included. Examples of the methods include a method of reducing low molecular weight components contained in the rubber component by reducing the amount of a molecular weight modifier or eliminating the molecular weight modifier used in the production of the rubber component, a method of controlling the amount of carboxyl groups as cross-linkable groups (e.g., a method of increasing the amount of carboxyl groups), a method of controlling the amount of a monomer having a short side chain (e.g., methyl acrylate or methyl methacrylate) used as a monomer constituting the rubber component (e.g., a method of reducing the amount of a monomer having a short side chain), and a method of adding a specific antioxidant to the cross-linkable rubber. These methods are preferably used in combination.

In the present invention, from the viewpoint of the capability of properly controlling the sum of intensities within a region of 0 to 8 msec in relaxation time after a cross-linked rubber is formed from the cross-linkable rubber and subjected to high temperature storage at 150°C for 1008 hours, preferably, the cross-linkable rubber is allowed to contain a bisphenol antioxidant and/or a benzimidazole antioxidant in addition to the rubber component. In this case, the cross-linkable rubber is a rubber composition containing the rubber component and a bisphenol antioxidant and/or a benzimidazole antioxidant.

Examples of the bisphenol antioxidant include bisphenol-alkanes such as 2,2'-methylenebis(4-methyl-6-tert-butylphenol) and 4,4'-butylidenebis(3-methyl-6-tert-butylphenol); bisphenol-sulfides such as 4,4'-thiobis(3-methyl-6-t-butylphenol). Among these, preferred is bisphenol-alkanes, more preferred is 2,2'-methylenebis(4-methyl-6-tertbutylphenol).

Examples of the benzimidazole antioxidant include 2-mercaptobenzimidazole, zinc salts of 2-mercaptobenzimidazole, 2-mercaptomethylbenzimidazole, and the like. Among these, preferred is 2-mercaptobenzimidazole.

The cross-linkable rubber according to the present invention preferably contains at least one of the bisphenol antioxidant and the benzimidazole antioxidant. From the viewpoint of the capability of more suitably controlling the sum of intensities within a region of 0 to 8 msec in relaxation time after a cross-linked rubber is formed from the cross-linkable rubber and subjected to high temperature storage at 150°C for 1008 hours, the cross-linkable rubber according to the present invention preferably contains both the bisphenol antioxidant and the benzimidazole antioxidant. In this case, the ratio of the contents (ratio by weight) of the bisphenol antioxidant and the benzimidazole antioxidant is preferably 0.3:0.7 to 0.7:0.3, more preferably 0.4:0.6 to 0.6:0.4.

The total content of the bisphenol antioxidant and the benzimidazole antioxidant in the cross-linkable rubber according to the present invention is preferably 1 to 5 parts by weight, more preferably 2 to 5 parts by weight, still more preferably 2 to 4 parts by weight relative to 100 parts by weight of the rubber component.

Examples of the method for allowing the cross-linkable rubber according to the present invention to contain the bisphenol antioxidant and/or the benzimidazole antioxidant include, but are not particularly limited to, a method of kneading the rubber component with the bisphenol antioxidant and/or the benzimidazole antioxidant using a kneader, a method of adding the bisphenol antioxidant and/or the benzimidazole antioxidant to a latex containing the rubber component, and causing coagulation of the latex, and the like.

The cross-linkable rubber according to the present invention is not particularly limited as long as it contains a rubber component having a carboxyl group as a cross-linkable group. Examples thereof include carboxyl group-containing acrylic rubbers, carboxyl group-containing nitrile rubbers, carboxyl group-containing synthetic polyisoprene rubbers, and the like. Among these, preferred are carboxyl group-containing acrylic rubbers and carboxyl group-containing nitrile rubbers.

### <Carboxyl group-containing acrylic rubber>

The carboxyl group-containing acrylic rubber used in the present invention includes an (meth)acrylic acid ester monomer (where the term (meth)acrylic acid ester monomer means an acrylic acid ester monomer and/or a methacrylic acid ester monomer. Hereinafter, the same applies to methyl (meth)acrylate and the like.) unit as the main component (e.g., 50% by weight or more in the total monomer units in the acrylic rubber) and a carboxyl group-containing monomer unit in the molecule.

The (meth)acrylic acid ester monomer that constitutes the (meth)acrylic acid ester monomer unit as the main component of the carboxyl group-containing acrylic rubber used in the present invention is not particularly limited. Example thereof include alkyl (meth)acrylate ester monomers, alkoxyalkyl (meth)acrylate ester monomers, and the like.

The alkyl (meth)acrylate ester monomers are not particularly limited, but are preferably (meth)acrylic acid esters of C₁ to C₈ alkanols. Specific examples thereof include methyl (meth)acrylate, ethyl (meth)acrylate, n-propyl (meth)acrylate, isopropyl (meth)acrylate, n-butyl (meth)acrylate, isobutyl (meth)acrylate, n-hexyl (meth)acrylate, 2-ethylhexyl (meth)acrylate, cyclohexyl (meth)acrylate, and the like. Among these, preferred are ethyl (meth)acrylate and n-butyl (meth)acrylate, particularly preferred are ethyl acrylate and n-butyl acrylate. These can be used alone or in combination.

The alkoxyalkyl (meth)acrylate ester monomers are not particularly limited, but are more preferably (meth)acrylic acid esters of C₂ to C₁₂ alkoxyalkyl alcohols, more preferably (meth)acrylic acid esters of C₂ to C₈ alkoxyalkyl alcohols. Specific examples thereof include methoxymethyl (meth)acrylate, ethoxymethyl (meth)acrylate, 2-methoxyethyl (meth)acrylate, 2-ethoxyethyl (meth)acrylate, 2-propoxyethyl (meth)acrylate, 2-butoxyethyl (meth)acrylate, 3-methoxypropyl (meth)acrylate, 4-methoxybutyl (meth)acrylate, and the like. Among these, preferred are 2-ethoxyethyl (meth)acrylate and 2-methoxyethyl (meth)acrylate, particularly preferred are 2-ethoxyethyl acrylate and 2-methoxyethyl acrylate. These can be used alone or in combination.

The content of the (meth)acrylic acid ester monomer unit in the carboxyl group-containing acrylic rubber used in the present invention is preferably 50 to 99.9% by weight, more preferably 70 to 99.5% by weight, still more preferably 90 to 99.5% by weight, particularly preferably 95 to 99% by weight. When the content of the (meth)acrylic acid ester monomer unit is within the ranges above, the resulting cross-linked rubber can have improved weatherability, heat resistance, and oil resistance.

In the present invention, the (meth)acrylic acid ester monomer unit preferably comprises 30 to 100% by weight of an alkyl (meth)acrylate ester monomer unit and 70 to 0% by weight of an alkoxyalkyl (meth)acrylate ester monomer unit.

The carboxyl group-containing monomer constituting the carboxyl group-containing monomer unit is not particularly limited. Examples thereof include C₃ to C₁₂ α,β-ethylenically unsaturated monocarboxylic acids, C₄ to C₁₂ α,β-ethylenically unsaturated dicarboxylic acids, monoesters of C₄ to C₁₂ α,β-ethylenically unsaturated dicarboxylic acids and C₁ to C₈ alkanols, and the like.

Specific examples of the C₃ to C₁₂ α,β-ethylenically unsaturated monocarboxylic acids include acrylic acid, methacrylic acid, α-ethylacrylic acid, crotonic acid, cinnamic acid, and the like.

Specific examples of the C₄ to C₁₂ α,β-ethylenically unsaturated dicarboxylic acids include butenedioic acids such as fumaric acid and maleic acid; itaconic acid; citraconic acid; chloromaleic acid; and the like.

Specific examples of the monoesters of C₄ to C₁₂ α,β-ethylenically unsaturated dicarboxylic acids and C₁ to C₈ alkanols include linear monoalkyl esters of butenedioic acid such as monomethyl fumarate, monoethyl fumarate, mono-n-butyl fumarate, monomethyl maleate, monoethyl maleate, and mono-n-butyl maleate; butenedioic acid monoesters having an alicyclic structure such as monocyclopentyl fumarate, monocyclohexyl fumarate, monocyclohexenyl fumarate, monocyclopentyl maleate, monocyclohexyl maleate, and monocyclohexenyl maleate; itaconic acid monoesters such as monomethyl itaconate, monoethyl itaconate, mono-n-butyl itaconate, and monocyclohexyl itaconate; and the like.

Among these, preferred are linear monoalkyl esters of butenedioic acid or butenedioic acid monoesters having an alicyclic structure, more preferred are mono-n-butyl fumarate, mono-n-butyl maleate, monocyclohexyl fumarate, and monocyclohexyl maleate, still more preferred are mono-n-butyl fumarate and monocyclohexyl maleate. These carboxyl group-containing monomers can be used alone or in combination. Among these monomers listed above, the dicarboxylic acids include those present as anhydrides thereof.

The content of the carboxyl group-containing monomer unit is preferably 0.1 to 10% by weight, more preferably 0.5 to 7% by weight, still more preferably 1 to 5% by weight. When the content of the carboxyl group-containing monomer unit is within the ranges above, a cross-linked rubber having further improved compressive stress relaxation properties can be obtained.

The content of carboxyl groups, that is, the number of moles (ephr) of carboxyl groups per 100 g of the carboxyl group-containing acrylic rubber is preferably 4 × 10⁻⁴ to 4 × 10⁻¹ (ephr), more preferably 1 × 10⁻³ to 2 × 10⁻¹ (ephr), still more preferably 5 × 10⁻³ to 1 × 10⁻¹ (ephr) .

The carboxyl group-containing acrylic rubber used in the present invention can optionally contain an additional cross-linkable monomer unit. Examples of cross-linkable monomers that constitute the additional cross-linkable monomer unit include epoxy group-containing monomers such as epoxy group-containing (meth)acrylic acid esters and epoxy group-containing ethers; halogen atom-containing monomers such as unsaturated alcohol esters of halogen-containing saturated carboxylic acids, haloalkyl (meth)acrylates, haloacyloxyalkyl (meth)acrylates, (haloacetylcarbamoyloxy)alkyl (meth)acrylates, halogen-containing unsaturated ethers, halogen-containing unsaturated ketones, halomethyl group-containing aromatic vinyl compounds, halogen-containing unsaturated amides, and haloacetyl group-containing unsaturated monomers; diene monomers such as conjugated diene monomers and nonconjugated diene monomers; and the like.

In addition to the (meth)acrylic acid ester monomer unit and the carboxyl group-containing monomer unit, the carboxyl group-containing acrylic rubber can optionally contain units of an additional monomer copolymerizable with the (meth)acrylic acid ester monomers and the carboxyl group-containing monomers.

Such a copolymerizable additional monomer is not particularly limited. Examples thereof include aromatic vinyl monomers, α,β-ethylenically unsaturated nitrile monomers, monomers having 2 or more acryloyloxy groups (hereinafter, sometimes referred to as "polyfunctional acrylic monomers"), olefin monomers, vinyl ether compounds, and the like.

Specific examples of the aromatic vinyl monomers include styrene, α-methylstyrene, divinylbenzene, and the like.

Specific examples of the α,β-ethylenically unsaturated nitrile monomers include acrylonitrile, methacrylonitrile, and the like.

Specific examples of the polyfunctional acrylic monomers include ethylene glycol di(meth)acrylate, propylene glycol di(meth)acrylate, and the like.

Specific examples of the olefin monomers include ethylene, propylene, 1-butene, 1-octene, and the like.

Specific examples of the vinyl ether compounds include vinyl acetate, ethyl vinyl ether, n-butyl vinyl ethers, and the like.

Among these, preferred are styrene, acrylonitrile, methacrylonitrile, ethylene, and vinyl acetate, and more preferred are acrylonitrile, methacrylonitrile, ethylene, and vinyl acetate.

The copolymerizable additional monomers can be used alone or in combination.

The content of units of the additional monomer in the carboxyl group-containing acrylic rubber is preferably 30% by weight or less, more preferably 10% by weight or less.

The weight average molecular weight (Mw) of the carboxyl group-containing acrylic rubber used in the present invention is not particularly limited, but is preferably 50,000 to 5,000,000, more preferably 100,000 to 4,000,000, still more preferably 150,000 to 3,500,000. The weight average molecular weight of the carboxyl group-containing acrylic rubber can be measured by gel permeation chromatography against polystyrene standards.

The Mooney viscosity (ML1+4, 100°C) (polymer Mooney) of the carboxyl group-containing acrylic rubber used in the present invention is preferably 10 to 150, more preferably 10 to 80, still more preferably 20 to 70, particularly preferably 25 to 60.

The carboxyl group-containing acrylic rubber used in the present invention can be produced by polymerizing the monomers listed above. As a method for the polymerization reaction, any method among an emulsion polymerization method, a suspension polymerization method, a bulk polymerization method, and a solution polymerization method can be used. From the viewpoint of ease of control of the polymerization reaction and the like, an emulsion polymerization method is preferred. In emulsion polymerization, in addition to an emulsifier and a polymerization initiator, commonly used polymerization auxiliary materials can be used.

Emulsion polymerization can be performed by any one of a batchwise method, a semi-batchwise method, and a continuous method. The polymerization is generally carried out at a temperature within the range of 0 to 70°C, preferably 5 to 50°C.

Emulsion polymerization can be performed using a molecular weight modifier or without using the molecular weight modifier. However, as described above, from the viewpoint of reducing the amount of low molecular weight components contained in the carboxyl group-containing acrylic rubber, and thus suitably controlling the sum of intensities within a region of 0 to 8 msec in relaxation time after a cross-linked rubber is formed from the cross-linkable rubber and subjected to high temperature storage at 150°C for 1008 hours to fall within the ranges above, a preferred embodiment is reducing the amount of the molecular weight modifier or eliminating the molecular weight modifier used in the emulsion polymerization. The amount of the molecular weight modifier used is preferably 0 to 0.2 parts by weight, more preferably 0 to 0.05 parts by weight relative to 100 parts by weight of the monomers used in polymerization. The molecular weight modifier is not particularly limited. Examples thereof include mercaptans such as t-dodecyl mercaptan, n-dodecyl mercaptan, and octyl mercaptan; halogenated hydrocarbons such as carbon tetrachloride, methylene chloride, and methylene bromide; α-methylstyrene dimers; sulfur-containing compounds such as tetraethylthiuram disulfide, dipentamethylenethiuram disulfide, and diisopropylxanthogen disulfide; and the like. These can be used alone or in combination.

The latex of the carboxyl group-containing acrylic rubber obtained by emulsion polymerization can be allowed to be coagulated, and optionally washed and dried to give a solid carboxyl group-containing acrylic rubber. At this time, the bisphenol antioxidant and/or the benzimidazole antioxidant can be added to the latex of the carboxyl group-containing acrylic rubber in advance, and thereafter the resulting mixture can be allowed to be coagulated, and optionally washed and dried to give a solid carboxyl group-containing acrylic rubber containing the bisphenol antioxidant and/or the benzimidazole antioxidant.

### <Carboxyl group-containing nitrile rubber>

The carboxyl group-containing nitrile rubber used in the present invention is not particularly limited. Examples thereof include those obtained by copolymerizing α,β-ethylenically unsaturated nitrile monomers and carboxyl group-containing monomers, and copolymerizable additional monomers added as needed.

The α,β-ethylenically unsaturated nitrile monomer is not particularly limited as long as the α,β-ethylenically unsaturated nitrile monomer is an α,β-ethylenically unsaturated compound having a nitrile group. Examples thereof include acrylonitrile; α-halogenoacrylonitriles such as α-chloroacrylonitrile and α-bromoacrylonitrile; α-alkylacrylonitriles such as methacrylonitrile; and the like. Among these, preferred are acrylonitrile and methacrylonitrile, and more preferred is acrylonitrile. The α,β-ethylenically unsaturated nitrile monomers can be used alone or in combination.

The content of the α,β-ethylenically unsaturated nitrile monomer unit in the carboxyl group-containing nitrile rubber used in the present invention is preferably 5 to 60% by weight, more preferably 10 to 50% by weight, still more preferably 15 to 40% by weight. When the content of the α,β-ethylenically unsaturated nitrile monomer unit is within the ranges above, an excellent balance of oil resistance and cold resistance can be achieved.

As the carboxyl group-containing monomers, for example, those exemplified in the carboxyl group-containing acrylic rubber described above can be used, and the same applies to preferred carboxyl group-containing monomers.

The content of the carboxyl group-containing monomer unit in the carboxyl group-containing nitrile rubber used in the present invention is preferably 1 to 30% by weight, more preferably 2 to 25% by weight, still more preferably 2 to 20% by weight. When the content of the carboxyl group-containing monomer unit is within the ranges above, a cross-linked rubber having further improved compressive stress relaxation properties can be obtained.

In addition, the carboxyl group-containing nitrile rubber used in the present invention preferably further contains a conjugated diene monomer unit to provide a cross-linked rubber having rubber elasticity.

Conjugated diene monomers for forming the conjugated diene monomer unit are preferably C₄ to C₆ conjugated diene monomers such as 1,3-butadiene, isoprene, 2,3-dimethyl-1,3-butadiene, 1,3-pentadiene, and chloroprene, more preferably 1,3-butadiene and isoprene, particularly preferably 1,3-butadiene. The conjugated diene monomers can be used alone or in combination.

The content of the conjugated diene monomer unit (including hydrogenated portions) is preferably 10 to 80% by weight, more preferably 25 to 75% by weight, still more preferably 45 to 65% by weight relative to the total monomer units. When the content of the conjugated diene monomer unit is within the ranges above, a cross-linked rubber to be obtained can have excellent rubber elasticity while maintaining good heat resistance and chemical stability.

The carboxyl group-containing nitrile rubber used in the present invention preferably further contains an α,β-ethylenically unsaturated monocarboxylic acid ester monomer unit from the viewpoint of further improving cold resistance of a cross-linked rubber to be obtained.

Examples of the α,β-ethylenically unsaturated monocarboxylic acid ester monomers include, but are not particularly limited to, (meth)acrylic acid ester monomers. As the (meth)acrylic acid ester monomers, for example, those exemplified in the carboxyl group-containing acrylic rubber described above can be used, and the same applies to preferred (meth)acrylic acid ester monomers.

The content of the α,β-ethylenically unsaturated monocarboxylic acid ester monomer unit in the carboxyl group-containing nitrile rubber used in the present invention is preferably 10 to 50% by weight, more preferably 20 to 45% by weight, still more preferably 25 to 40% by weight. When the content of the α,β-ethylenically unsaturated monocarboxylic acid ester monomer unit is within the ranges above, a cross-linked rubber having further improved cold resistance can be obtained.

In addition to the α,β-ethylenically unsaturated nitrile monomer unit, the carboxyl group-containing monomer unit, and the conjugated diene monomer unit and α,β-ethylenically unsaturated monocarboxylic acid ester monomer unit that are optionally copolymerized therewith, the carboxyl group-containing nitrile rubber used in the present invention can contain units of an additional monomer copolymerizable with the monomers constituting these monomer units. Examples of such additional monomers include ethylene, α-olefin monomers, aromatic vinyl monomers, fluorine-containing vinyl monomers, copolymerizable antioxidants, and the like.

The α-olefin monomers are preferably those having 3 to 12 carbon atoms, and examples thereof include propylene, 1-butene, 4-methyl-1-pentene, 1-hexene, 1-octene, and the like.

Examples of the aromatic vinyl monomers include styrene, α-methylstyrene, vinylpyridine, and the like.

Examples of the fluorine-containing vinyl monomers include fluoroethyl vinyl ether, fluoropropyl vinyl ether, o-trifluoromethylstyrene, vinyl pentafluorobenzoate, difluoroethylene, tetrafluoroethylene, and the like.

Examples of the copolymerizable antioxidants include N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, N-phenyl-4-(4-vinylbenzyloxy)aniline, and the like.

A plurality of these copolymerizable additional monomers can be used in combination. The content of the units of the additional monomers is preferably 30% by weight or less, more preferably 10% by weight or less relative to the total monomer units constituting the carboxyl group-containing nitrile rubber.

The carboxyl group-containing nitrile rubber used in the present invention can be hydrogenated. When hydrogenated, the carboxyl group-containing nitrile rubber has an iodine value of preferably 120 or less, more preferably 50 or less, still more preferably 30 or less.

The content of carboxyl groups in the carboxyl group-containing nitrile rubber used in the present invention, that is, the number of moles (ephr) of carboxyl groups per 100 g of the carboxyl group-containing nitrile rubber is preferably 5 × 10⁻⁴ to 5 × 10⁻¹ (ephr), more preferably 1 × 10⁻³ to 1 × 10⁻¹ (ephr), still more preferably 5 × 10⁻³ to 6 × 10⁻² (ephr) .

The Mooney viscosity (ML1+4, 100°C) (polymer Mooney) of the carboxyl group-containing nitrile rubber used in the present invention is preferably 15 to 200, more preferably 30 to 100, still more preferably 45 to 90.

Although the method of producing the carboxyl group-containing nitrile rubber used in the present invention is not particularly limited, the carboxyl group-containing nitrile rubber used in the present invention can be produced by copolymerizing the monomers described above by an emulsion polymerization method, and optionally hydrogenating carbon-carbon double bonds in the resulting copolymer. In emulsion polymerization, in addition to an emulsifier and a polymerization initiator, commonly used polymerization auxiliary materials can be used.

Emulsion polymerization can be performed by any one of a batchwise method, a semi-batchwise method, and a continuous method. Polymerization is generally carried out at a temperature within the range of 0 to 70°C, preferably 5 to 50°C.

Emulsion polymerization can be performed using a molecular weight modifier or without using the molecular weight modifier. However, as described above, from the viewpoint of reducing the amount of low molecular weight components contained in the carboxyl group-containing acrylic rubber, and thus suitably controlling the sum of intensities within a region of 0 to 8 msec in relaxation time after a cross-linked rubber is formed from the cross-linkable rubber and subjected to high temperature storage at 150°C for 1008 hours to fall within the ranges above, a preferred embodiment is reducing the amount of the molecular weight modifier or eliminating the molecular weight modifier used in the emulsion polymerization. The amount of the molecular weight modifier used is preferably 0 to 0.5 parts by weight, more preferably 0 to 0.2 parts by weight relative to 100 parts by weight of the monomers used in polymerization. The molecular weight modifier is not particularly limited. Examples thereof include mercaptans such as t-dodecyl mercaptan, n-dodecyl mercaptan, and octyl mercaptan; halogenated hydrocarbons such as carbon tetrachloride, methylene chloride, and methylene bromide; α-methylstyrene dimers; sulfur-containing compounds such as tetraethylthiuram disulfide, dipentamethylenethiuram disulfide, and diisopropylxanthogen disulfide; and the like. These can be used alone or in combination.

The resulting copolymer is optionally subjected to hydrogenation (hydrogen addition reaction) of the copolymer. The hydrogenation can be carried out by publicly known methods, and an aqueous layer hydrogenation method is preferred. Examples of the aqueous layer hydrogenation method include an aqueous layer direct hydrogenation method including supplying hydrogen to the reaction system in the presence of a hydrogenation catalyst to cause hydrogenation, and an aqueous layer indirect hydrogenation method including reducing the copolymer in the presence of an oxidizing agent, a reductant, and an activating agent to cause hydrogenation. Among these, preferred is the aqueous layer direct hydrogenation method.

In the aqueous layer direct hydrogenation method, the concentration of the copolymer in the aqueous layer (concentration in a latex state) is preferably 40% by weight or less in order to prevent aggregation. The hydrogenation catalyst is not particularly limited as long as it is a compound not easily decomposed by water. Specific examples of the compound include palladium catalysts including palladium metal; palladium oxide; palladium hydroxide; palladium salts of carboxylic acids such as formic acid, acetic acid, propionic acid, lauric acid, succinic acid, oleic acid, and phthalic acid; chlorinated products of palladium such as palladium chloride, dichloro(cyclooctadiene)palladium, dichloro(norbornadiene)palladium, and ammonium hexachloropalladate(IV); iodinated products such as palladium iodide; palladium sulfate dihydrate; and the like. Among these, particularly preferred are palladium metal, palladium salts of carboxylic acids, palladium chloride, dichloro(norbornadiene)palladium, and ammonium hexachloropalladate(IV). The amount of the hydrogenation catalyst used can be suitably determined, but is preferably 5 to 6000 ppm by weight, more preferably 10 to 4000 ppm by weight.

The latex of the carboxyl group-containing nitrile rubber obtained by emulsion polymerization and optionally subjected to hydrogenation can be allowed to be coagulated, and optionally washed and dried to give a solid carboxyl group-containing nitrile rubber. At this time, the bisphenol antioxidant and/or the benzimidazole antioxidant can be added to the latex of the carboxyl group-containing nitrile rubber in advance, and thereafter the resulting mixture can be allowed to be coagulated, and optionally washed and dried to give a solid carboxyl group-containing nitrile rubber containing the bisphenol antioxidant and/or the benzimidazole antioxidant.

### <Compounding agents and the like>

In addition to the rubber component such as the carboxyl group-containing acrylic rubber and the carboxyl group-containing nitrile rubber as described above, and a bisphenol antioxidant and/or a benzimidazole antioxidant added as needed, the cross-linkable rubber according to the present invention can contain various compounding agents.

In this case, the cross-linkable rubber according to the present invention is a rubber composition containing the rubber component, the bisphenol antioxidant and/or the benzimidazole antioxidant added as needed, and compounding agents.

Examples of the compounding agents include cross-linking agents. Since the cross-linkable rubber according to the present invention contains the rubber component having a carboxyl group as a cross-linkable group, the cross-linking agent is not particularly limited as long as it is capable of cross-linking carboxyl groups. For example, polyvalent amine compounds and carbonates thereof can be suitably used.

Any polyvalent amine compounds and carbonates thereof can be used without limitation. Preferred are C₄ to C₃₀ polyvalent amine compounds and carbonates thereof. Examples of such polyvalent amine compounds and carbonates thereof include aliphatic polyvalent amine compounds and carbonates thereof, aromatic polyvalent amine compounds, and the like.

Examples of the aliphatic polyvalent amine compounds and carbonates thereof include, but should not be limited to, hexamethylenediamine, hexamethylenediamine carbamate, N,N'-dicinnamylidene-1,6-hexanediamine, and the like. Among these, preferred is hexamethylenediamine carbamate.

Examples of aromatic polyvalent amine compounds include, but should not be limited to, 4,4'-methylenedianiline, p-phenylenediamine, m-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2-bis[4-(4-aminophenoxy)phenyl]propane, 4,4'-diaminobenzanilide, 4,4'-bis(4-aminophenoxy)biphenyl, m-xylylenediamine, p-xylylenediamine, 1,3,5-benzenetriamine, and the like. Among these, preferred is 2,2'-bis[4-(4-aminophenoxy)phenyl]propane.

The content of the cross-linking agent is preferably 0.1 to 10 parts by weight, more preferably 0.1 to 5 parts by weight, still more preferably 0.2 to 4 parts by weight relative to 100 parts by weight of the rubber component.

The cross-linkable rubber according to the present invention can further comprise a cross-linking accelerator. Examples of the cross-linking accelerator that can be used include, but are not particularly limited to, guanidine compounds, diazabicycloalkene compounds, imidazole compounds, quaternary onium salts, tertiary phosphine compounds, aliphatic monovalent secondary amine compounds, aliphatic monovalent tertiary amine compounds, and the like. Among these, preferred are guanidine compounds, diazabicycloalkene compounds, and aliphatic monovalent secondary amine compounds, and particularly preferred are guanidine compounds and diazabicycloalkene compounds. These cross-linking accelerator can be used alone or in combination.

Specific examples of the guanidine compounds include 1,3-di-o-tolylguanidine, 1,3-diphenylguanidine, and the like. Specific examples of the diazabicycloalkene compounds include 1,8-diazabicyclo[5.4.0]undec-7-ene, 1,5-diazabicyclo[4.3.0]non-5-ene, and the like. Specific examples of the imidazole compounds include 2-methylimidazole, 2-phenylimidazole, and the like. Specific examples of the quaternary onium salts include tetra-n-butylammonium bromide, octadecyltri-n-butylammonium bromide, and the like. Specific examples of the tertiary phosphine compounds include triphenylphosphine, tri-p-tolylphosphine, and the like.

The aliphatic monovalent secondary amine compounds are compounds where two hydrogen atoms of ammonia are substituted by an aliphatic hydrocarbon group. The aliphatic hydrocarbon groups which substitute the hydrogen atoms are preferably C₁ to C₃₀ groups. Specific examples of the aliphatic monovalent secondary amine compounds include dimethylamine, diethylamine, dipropylamine, diallylamine, diisopropylamine, di-n-butylamine, di-t-butylamine, di-sec-butylamine, dihexylamine, diheptylamine, dioctylamine, dinonylamine, didecylamine, diundecylamine, didodecylamine, ditridecylamine, ditetradecylamine, dipentadecylamine, dicetylamine, di-2-ethylhexylamine, dioctadecylamine, and the like.

The aliphatic monovalent tertiary amine compounds are compounds where all the three hydrogen atoms of ammonia are substituted by an aliphatic hydrocarbon group. The aliphatic hydrocarbon groups which substitute the hydrogen atoms are preferably C₁ to C₃₀ groups. Specific examples of the aliphatic monovalent tertiary amine compounds include trimethylamine, triethylamine, tripropylamine, triallylamine, triisopropylamine, tri-n-butylamine, tri-t-butylamine, tri-sec-butylamine, trihexylamine, triheptylamine, trioctylamine, trinonylamine, tridecylamine, triundecylamine, tridodecylamine, and the like.

The content of the cross-linking accelerator is preferably 0.1 to 10 parts by weight, more preferably 0.5 to 7.5 parts by weight, particularly preferably 1 to 5 parts by weight relative to 100 parts by weight of the rubber component.

The cross-linkable rubber according to the present invention can further comprise a filler. Examples of the filler include, but are not particularly limited to, reinforcing fillers, non-reinforcing fillers, and the like. Among these, particularly preferred are reinforcing fillers.

Examples of the reinforcing fillers include carbon blacks such as furnace black, acetylene black, thermal black, channel black, and graphite; silicas such as wet silica, dry silica, and colloidal silica; and the like. Examples of the non-reinforcing fillers include quartz powder, clay such as diatomite, zinc oxide, basic magnesium carbonate, active calcium carbonate, magnesium silicate, aluminum silicate, titanium dioxide, talc, aluminum sulfate, calcium sulfate, barium sulfate, and the like. Among these, from the viewpoint of the capability of further improving compressive stress relaxation properties, carbon black is preferred, and from the viewpoint of the capability of still further improving compressive stress relaxation properties, carbon black having a relatively small specific surface area is suitably used as the carbon black. The BET specific surface area of carbon black is preferably 50.0 m²/g or less.

These fillers can be used alone or in combination. The content of the filler is not particularly limited, but is preferably 10 to 200 parts by weight, more preferably 30 to 100 parts by weight, still more preferably 40 to 80 parts by weight relative to 100 parts by weight of the rubber component. When the content of the filler is within the ranges above, compressive stress relaxation properties can be further improved. In particular, the compressive stress relaxation properties can be further improved as the content of carbon black as a filler is reduced within the ranges above.

Besides the compounding agents described above, the cross-linkable rubber according to the present invention can contain compounding agents usually used in the rubber processing field. Examples of such compounding agents include light stabilizers; scorch retardants; plasticizers; processing aids; tackifiers; lubricants; greases; flame retardants; antifungal agents; antistatic agents; colorants; cross-linking retarders; and the like. These compounding agents can be compounded in any amount in the range not inhibiting the object and effect of the present invention, and can be appropriately compounded in amounts according to the purpose of compounding.

The method for compounding the cross-linkable rubber according to the present invention with various compounding agents is not particularly limited, but the composition can be prepared by compounding the rubber component with the cross-linking agent and various other compounding agents used as needed, mixing and kneading these ingredients using an open roll mill, a Banbury mixer, or a kneader, and further kneading these using a kneading roll.

Although the ingredients can be compounded in any order, a preferred order is as follows. Ingredients which barely react or decompose by heat are sufficiently mixed, and then ingredients which readily react or decompose by heat, such as the cross-linking agent, are mixed in a short time at a temperature at which the reaction and the decomposition thereof are avoided.

### <Cross-linked rubber>

The cross-linked rubber according to the present invention can be obtained by cross-linking the above-described cross-linkable rubber according to the present invention.

The cross-linked rubber according to the present invention can be produced as follows: The cross-linkable rubber according to the present invention is used and formed with a forming machine corresponding to a desired shape, such as an extruder, an injection molding machine, a compressor, or a roll, and the formed product is subjected to a cross-linking reaction by heating to fix the shape of the formed product. In this case, cross-linking may be performed after the cross-linkable rubber is preliminarily formed, or cross-linking and forming may be performed at the same time. The forming temperature is usually 10 to 200°C, preferably 25 to 120°C. The cross-linking temperature is usually 130 to 250°C, preferably 150 to 240°C, and the cross-linking time is usually 1 minute to 10 hours, preferably 2 minutes to 5 hours. The heating method is appropriately selected from methods used in cross-linking of rubber, such as press heating, steam heating, oven heating, and hot air heating.

The cross-linked rubber according to the present invention may be further heated to undergo secondary cross-linking depending on the shape and size of the cross-linked rubber. The secondary cross-linking is performed preferably for 1 to 48 hours although the time varies depending on the heating method, the cross-linking temperature, the shape of the product, and the like. The heating method and the heating temperature may be appropriately selected.

The cross-linked rubber according to the present invention thus obtained is a product obtained by cross-linking the above-described cross-linkable rubber according to the present invention, and thus the sum of intensities within a region of 0 to 8 msec in relaxation time obtained by pulse NMR analysis performed on the cross-linked rubber after high temperature storage at 150°C for 1008 hours is 19.0 or less, preferably within a range from 17.0 to 19.0, more preferably within a range from 17.0 to 18.0. In addition, the sum of intensities within a region of 0 to 8 msec in relaxation time obtained by pulse NMR analysis performed on the cross-linked rubber according to the present invention without high temperature storage (i.e., that before subjected to high temperature storage at 150°C for 1008 hours) is preferably 19.0 or less, more preferably 15.0 to 17.0.

The cross-linked rubber according to the present invention is suitably used as sealing materials such as O-rings, packings, diaphragms, oil seals, shaft seals, bearing sheaths, mechanical seals, wellhead seals, seals for electrical and electronic devices, and seals for air compressors; a variety of gaskets such as cylinder head gaskets attached to a connection between a cylinder block and a cylinder head, rocker cover gaskets attached to a connection between a rocker cover and a cylinder head, oil pan gaskets attached to a connection between an oil pan and a cylinder head or a transmission case, gaskets for a fuel cell separator attached between a pair of housings which sandwich a unit cell including a positive electrode, an electrolyte plate, and a negative electrode, and a gasket for top covers for hard disk drives; cushioning materials, vibration insulators; cable sheath materials; industrial belts; tubes and hoses; sheets; and the like. Especially, the cross-linked rubber according to the present invention has high cold resistance and excellent compressive stress relaxation properties, and thus can suitably be used in applications that require such properties, in particular, in gasket applications.

### EXAMPLES

The present invention is more specifically described below by way of Examples and Comparative Examples, but the present invention is not limited to the examples. Hereinafter, the term "part(s)" refers to "part(s) by weight" unless otherwise indicated. The methods for testing or evaluating physical properties and characteristics are as follows.

### [Monomer composition of carboxyl group-containing acrylic rubber]

The monomer composition of the carboxyl group-containing acrylic rubber was calculated from the amounts of the monomers used in the polymerization reaction and the polymerization conversion ratio. Specifically, in all of Examples and Comparative Examples, unreacted monomers were not observed in the emulsion polymerization reaction, and the polymerization conversion ratio was approximately 100%. From this finding, the amounts of the monomers used in the polymerization reaction were regarded as the contents of the monomer units in each carboxyl group-containing acrylic rubber.

### [Pulse NMR analysis]

The cross-linkable rubber composition for pulse NMR analysis was cross-linked by pressurizing using a press molding machine (trade name "NF-50T", available from Shinto Metal Industries, Ltd.) at a pressure of 10 MPa at 230°C for 3 minutes to produce a sheet having a thickness of 1.0 mm, and the sheet was cut into a piece of 10 mm (length) × 10 mm (width) × 1.0 mm (thickness) to give a cross-linked rubber for pulse NMR analysis (test sample).

Next, a sample tube for TD-NMR (10 mm in diameter) loaded with the cross-linked rubber before high temperature storage for pulse NMR analysis (test sample) prepared above was inserted into a pulse NMR inner tube, and subjected to pulse NMR analysis. The pulse NMR is a method for detecting signals responding to pulses to calculate the ¹H nuclear magnetic relaxation time of a specimen. In the pulse NMR analysis, a free induction decay curve is obtained as responses to the pulses. A pulse NMR analyzer (trade name "minispec mq20", available from Bruker Corporation) was used as a measurement instrument, the spin-echo method was used as a method for the measurement, and the frequency of nucleus measured was 19.95 MHz (¹H nucleus).

The conditions for the measurement were as follows.

First, the test sample was kept at 150°C for 15 minutes, then measured using following parameters:
Duration of measurement: 0 to 8 msec
Interval between the 90-degree pulse and the 180-degree pulse in the initial measurement: 0.04 msec
Interval between the 90-degree pulse and the 180-degree pulse in the final measurement: 4 msec
Total number of measurements: 30 times
Number of accumulation: 8 times
Interval of repeated spin echoes: 2 sec
Temperature in measurement: 150°C

The total number of measurements was 30 times in these measurements. The timing of each measurement was as described below. Herein, Tn [msec] refers to the timing of measurement in the n-th measurement denoted by the time elapsed from the start of the measurement, T₀ = 0 [msec], DF refers to a coefficient for defining the timing of measurement calculated by the expressions below, C refers to a correction constant depending on the measurement system or the like. C is generally 0 to 15% of the time corresponding to T₁, the timing of 1-st measurement. DF = exp (1/(total number of measurements - 1) * ln (interval between 90-degree pulse and 180-degree pulse in the final measurement/interval between 90-degree pulse and 180-degree pulse in the initial measurement))

In this measurement, DF is calculated by the following expression: DF = exp (1/(30 - 1) * ln (4/0.04)).

### (Timing of each measurement)

Timing of 1-st measurement T₂: 0.08 + C [msec]
Timing of 2-nd measurement T₂: T₁ + 0.08 × DF + C [msec]
Timing of 3-rd measurement T₃: T₂ + 0.08 × (DF)² + C [msec]
Timing of n-th measurement Tₙ: Tₙ₋₁ + 0.08 × (DF)ⁿ⁻¹ + C [msec]

In the timings of the measurements described above, the value "0.08" is twice the value of 0.04 msec, which is the interval between the 90-degree pulse and the 180-degree pulse in the initial measurement. In Examples and Comparative Examples, 0.00868 [msec] was used as the correction constant C.

Then, a free induction decay curve (relaxation time x versus relaxation intensity y) in spin-spin relaxation of the test sample was obtained, and the relaxation intensity yₙ at each relaxation time was divided by the relaxation intensity at a relaxation time of 0 in the resulting free induction decay curve to standardize the intensity. That is, the intensity was standardized where the relaxation intensity at a relaxation time of 0 was regarded as 1. Next, the sum of intensities within a region of 0 to 8 msec in relaxation time of a cross-linked rubber before high temperature storage for pulse NMR analysis (sum of intensities_before high temperature storage) was obtained by adding up the standardized relaxation intensities yₙ of the 30 points in a region of 0 to 8 msec in relaxation time.

In the same manner as described above, a cross-linked rubber before high temperature storage for pulse NMR analysis was prepared, and subjected to high temperature storage at 150°C for 1008 hours to prepare a cross-linked rubber after high temperature storage for pulse NMR analysis, and the resulting cross-linked rubber for pulse NMR analysis after high temperature storage was subjected to pulse NMR analysis as described above to obtain the sum of intensities within a region of 0 to 8 msec in relaxation time of the cross-linked rubber after high temperature storage for pulse NMR analysis (sum of intensities_after high temperature storage).

Fig. 1 shows a graph of the free induction decay curves obtained by measurements of test samples in Example 4 and Comparative Example 1. In Fig. 1, both of the results of measurements on the cross-linked rubbers before high temperature storage for pulse NMR analysis and the results of measurements on the cross-linked rubbers after high temperature storage for pulse NMR analysis are shown.

### <Normal state physical properties (hardness)>

A cross-linkable rubber composition for evaluation of physical properties was placed into a mold with a length of 15 cm, a width of 15 cm, and a depth of 0.2 cm, and press-molded at a pressure of 10 MPa at 170°C for 20 minutes to give a primarily cross-linked product in the form of a sheet. Next, the resulting primarily cross-linked product was transferred to a geer oven and subjected to secondary cross-linking at 170°C for 4 hours to give a sheet-shaped cross-linked product, and the resulting sheet-shaped cross-linked product was punched with a #3 dumbbell to prepare a test specimen. Using the resulting test specimen, the hardness of the cross-linked rubber was measured in accordance with JIS K6253 using a durometer hardness tester (type A) .

### <Compressive stress relaxation test>

A cross-linkable rubber composition for evaluation of physical properties was shaped and cross-linked by pressurizing at 170°C for 20 minutes to give a cylindrical cross-linked rubber with a diameter of 13 mm and a thickness of 6.3 mm, which was further heated at 170°C for 4 hours to cause a secondary cross-linking. The resulting cylindrical cross-linked rubber was compressed by 25% in the thickness direction, and maintained under an environment at 150°C to carry out a compressive stress relaxation test. In the compressive stress relaxation test, first, the compressive stress of the cylindrical cross-linked rubber was measured after 30 minutes from the start of the test to give an initial compressive stress, then the compressive stress of the cylindrical cross-linked rubber was measured after 1008 hours from the start of the test, and the ratio of the compressive stress to the initial compressive stress after 30 minutes from the start of the test was calculated to evaluate retention of the compressive stress. Specifically, in the compressive stress relaxation test, a compressive stress relaxation index was determined by the following equation "compressive stress relaxation index = compressive stress after 1008 hours/initial compressive stress". When the compressive stress relaxation index is larger, the compressive stress relaxation properties can be considered to be superior.

### <Low temperature sealing property>

A sheet-shaped cross-linked rubber was obtained in the same manner as in the evaluation of normal state physical properties, and a TR test (low temperature elasticity recovery test) was performed in accordance with JIS K6261 using the resulting sheet-shaped cross-linked rubber in a 50% elongated state. Specifically, the cross-linked rubber elongated by 50% was frozen at -70°C, and recovery of the elongated specimen by continuous elevation of the temperature was measured. The temperature (TR10) at which the length of the cross-linked product was reduced by 10% (recovered) by the elevation of the temperature was measured. When the TR10 is lower, it can be considered that the low temperature sealing property is superior and the low temperature properties are superior.

### <Example 1>

### (Production of carboxyl group-containing acrylic rubber (A-1))

46.294 Parts of ion exchanged water, 48.1 parts of ethyl acrylate as a monomer component, 49.1 parts of n-butyl acrylate, 2.8 parts of mono-n-butyl fumarate, and 1.8 parts of sodium tridecyloxyhexa(oxyethylene)phosphate ester (anionic emulsifier) as an emulsifier were placed into a mixing vessel provided with a homomixer, and stirred to prepare a monomer emulsion. In Example 1, no molecular weight modifier such as tert-dodecyl mercaptan was used.

In the next step, 170.853 parts of pure water and 2.962 parts of the monomer emulsion prepared above were placed into a polymerization reaction vessel provided with a thermometer and a stirrer, and were cooled to 12°C under a nitrogen stream. Subsequently, 145.132 parts of the monomer emulsion prepared above, 0.00033 parts of ferrous sulfate (reductant), 0.264 parts of sodium ascorbate (reductant), and 7.72 parts (0.22 parts in terms of potassium persulfate) of a 2.85% by weight potassium persulfate aqueous solution (polymerization initiator) were continuously added dropwise to a polymerization reaction vessel over 3 hours while the temperature was kept at 12°C. Subsequently, the reaction was continued for one hour in the state where the inner temperature of the polymerization reaction vessel was kept at 23°C. After it was checked that the polymerization conversion ratio reached approximately 100%, the polymerization reaction was stopped by adding hydroquinone as a polymerization terminator to prepare a polymer emulsion.

Subsequently, 60 parts of a 30% by weight magnesium sulfate aqueous solution adjusted to 85°C was placed into a coagulation vessel provided with a thermometer and a stirrer, and was stirred with a stirring blade in the state where the system was heated to 85°C. Under stirring, 100 parts of the polymer emulsion prepared above was continuously added to the magnesium sulfate aqueous solution to coagulate the polymer, which was filtered to obtain hydrous crumbs.

In the next step, 388 parts of industrial water was added to 100 parts of the solids content of the hydrous crumbs obtained above, stirred at room temperature for 5 minutes in the coagulation vessel, and the water was drained from the coagulation vessel to perform water-washing of the hydrous crumbs. The water-washed hydrous crumbs were dried with a hot air dryer at 110°C for one hour to yield a solid carboxyl group-containing acrylic rubber (A-1).

### (Preparation of cross-linkable rubber composition for pulse NMR analysis)

Next, 2 parts of 2,2'-methylenebis(4-methyl-6-tert-butylphenol) (trade name "NOCRAC NS-6", available from Ouchi Shinko Chemical Industrial Co., Ltd., a bisphenol antioxidant), and 2 parts of 2-mercaptobenzimidazole (trade name "NOCRAC MB", available from Ouchi Shinko Chemical Industrial Co., Ltd., a benzimidazole antioxidant) were added to 100 parts of the carboxyl group-containing acrylic rubber (A-1) obtained above, and kneaded with a roll at 50°C. Subsequently, the resulting mixture was compounded with 2 parts of 1,3-o-tolylguanidine (trade name "NOCCELER DT", available from Ouchi Shinko Chemical Industrial Co., Ltd., a cross-linking accelerator) and 1.2 parts of hexamethylenediamine carbamate (trade name "Diak#1", available from DuPont Elastomers, L.L.C., a cross-linking agent), and these were kneaded to yield a cross-linkable rubber composition for pulse NMR analysis, which was subjected to pulse NMR analysis according to the method described above. The results are shown in Table 1.

### (Preparation of cross-linkable rubber composition for evaluation of physical properties)

50 Parts of carbon black (trade name "SEAST SO", available from Tokai Carbon Co., Ltd., BET specific surface area: 42 m²/g), 2 parts of 2,2'-methylenebis(4-methyl-6-tert-butylphenol) (trade name "NOCRAC NS-6", available from Ouchi Shinko Chemical Industrial Co., Ltd., a bisphenol antioxidant), and 2 parts of 2-mercaptobenzimidazole (trade name "NOCRAC MB", available from Ouchi Shinko Chemical Industrial Co., Ltd., a benzimidazole antioxidant) were added to 100 parts of the carboxyl group-containing acrylic rubber (A-1) obtained above, and mixed at 50°C for 5 minutes using a Banbury mixer. Subsequently, after the resulting mixture was transferred to a roll at 50°C, and 2 parts of 1,3-o-tolylguanidine (trade name "NOCCELER DT", available from Ouchi Shinko Chemical Industrial Co., Ltd., a cross-linking accelerator) and 1.2 parts of hexamethylenediamine carbamate (trade name "Diak#1", available from DuPont Elastomers, a cross-linking agent) were compounded, these were kneaded to yield a cross-linkable rubber composition for evaluation of physical properties, which was subjected to measurements and evaluations of normal state physical properties (hardness), a compressive stress relaxation test, and a low temperature sealing property (TR10 in 50% elongated state). The results are shown in Table 1.

### <Example 2>

### (Preparation of cross-linkable rubber composition for pulse NMR analysis and cross-linkable rubber composition for evaluation of physical properties)

A cross-linkable rubber composition for pulse NMR analysis was obtained as in Example 1 using the carboxyl group-containing acrylic rubber (A-1) obtained in the same manner as in Example 1. In addition, a cross-linkable rubber composition for evaluation of physical properties was obtained as in Example 1 except that the amount of carbon black used was 60 parts. Using the resulting compositions, evaluations were performed as in Example 1. The results are shown in Table 1.

### <Example 3>

### (Preparation of carboxyl group-containing acrylic rubber (A-2))

A solid carboxyl group-containing acrylic rubber (A-2) was obtained by performing polymerization, coagulation, water-washing, and drying as in Example 1 except that the amount of ethyl acrylate used as a monomer was 48.8 parts, the amount of n-butyl acrylate used was 49.8 parts, and the amount of mono-n-butyl fumarate used was 1.4 parts in the preparation of the monomer emulsion.

### (Preparation of cross-linkable rubber composition for pulse NMR analysis and cross-linkable rubber composition for evaluation of physical properties)

A cross-linkable rubber composition for pulse NMR analysis and a cross-linkable rubber composition for evaluation of physical properties were prepared as in Example 2 except that 100 parts of the carboxyl group-containing acrylic rubber (A-2) obtained above was used instead of the carboxyl group-containing acrylic rubber (A-1) and the amount of hexamethylenediamine carbamate used was 0.6 parts, and evaluations were performed in the same manner as above. The results are shown in Table 1.

### <Example 4>

### (Preparation of carboxyl group-containing acrylic rubber (A-3))

A solid carboxyl group-containing acrylic rubber (A-3) was obtained by performing polymerization, coagulation, water-washing, and drying as in Example 3 except that 0.05 parts of tert-dodecyl mercaptan was additionally used as a molecular weight modifier in the preparation of the monomer emulsion.

### (Preparation of cross-linkable rubber composition for pulse NMR analysis and cross-linkable rubber composition for evaluation of physical properties)

A cross-linkable rubber composition for pulse NMR analysis and a cross-linkable rubber composition for evaluation of physical properties were prepared as in Example 3 except that 100 parts of the carboxyl group-containing acrylic rubber (A-3) obtained above was used instead of the carboxyl group-containing acrylic rubber (A-2), and evaluations were performed in the same manner as above. The results are shown in Table 1.

### <Example 5>

### (Preparation of cross-linkable rubber composition for pulse NMR analysis and cross-linkable rubber composition for evaluation of physical properties)

A cross-linkable rubber composition for pulse NMR analysis and a cross-linkable rubber composition for evaluation of physical properties were prepared as in Example 3 except that 2-mercaptobenzimidazole was not compounded, and evaluations were performed in the same manner as above. The results are shown in Table 1.

### <Example 6>

### (Preparation of cross-linkable rubber composition for pulse NMR analysis and cross-linkable rubber composition for evaluation of physical properties)

A cross-linkable rubber composition for pulse NMR analysis and a cross-linkable rubber composition for evaluation of physical properties were prepared as in Example 3 except that 2,2'-methylenebis(4-methyl-6-tert-butylphenol) was not compounded, and evaluations were performed in the same manner as above. The results are shown in Table 1.

### <Example 7>

### (Preparation of carboxyl group-containing acrylic rubber (A-4))

A solid carboxyl group-containing acrylic rubber (A-4) was obtained by performing polymerization, coagulation, water-washing, and drying as in Example 1 except that the amount of ethyl acrylate used as a monomer was 48.8 parts, the amount of n-butyl acrylate used was 24.8 parts, the amount of mono-n-butyl fumarate used was 1.4 parts, 25 parts of methyl acrylate was additionally used, and 0.05 parts of tert-dodecyl mercaptan was additionally used as a molecular weight modifier in the preparation of the monomer emulsion.

### (Preparation of cross-linkable rubber composition for pulse NMR analysis and cross-linkable rubber composition for evaluation of physical properties)

A cross-linkable rubber composition for pulse NMR analysis and a cross-linkable rubber composition for evaluation of physical properties were prepared as in Example 3 except that 100 parts of the carboxyl group-containing acrylic rubber (A-4) obtained above was used instead of the carboxyl group-containing acrylic rubber (A-2), and evaluations were performed in the same manner as above. The results are shown in Table 1.

### <Example 8>

### (Preparation of carboxyl group-containing acrylic rubber (A-5))

A solid carboxyl group-containing acrylic rubber (A-5) was obtained by performing polymerization, coagulation, water-washing, and drying as in Example 1 except that the amount of ethyl acrylate used as a monomer was 48.1 parts, the amount of n-butyl acrylate used was 49.1 parts, and 2.8 parts of monocyclohexyl fumarate was used instead of mono-n-butyl fumarate in the preparation of the monomer emulsion.

### (Preparation of cross-linkable rubber composition for pulse NMR analysis and cross-linkable rubber composition for evaluation of physical properties)

A cross-linkable rubber composition for pulse NMR analysis and a cross-linkable rubber composition for evaluation of physical properties were prepared as in Example 2 except that 100 parts of the carboxyl group-containing acrylic rubber (A-5) obtained above was used instead of the carboxyl group-containing acrylic rubber (A-1), and evaluations were performed in the same manner as above. The results are shown in Table 1.

### <Example 9>

### (Preparation of carboxyl group-containing nitrile rubber (A-6))

A reactor was charged with 220 parts of ion exchanged water, 5 parts of a sodium dodecylbenzenesulfonate aqueous solution having a concentration of 10%, 21.8 parts of acrylonitrile, 3 parts of mono-n-butyl maleate, 30.0 parts of n-butyl acrylate, and 0.2 parts of t-dodecyl mercaptan in this order, and the gas in the reactor was replaced with nitrogen three times, and then the reactor was charged with 45.2 parts of 1,3-butadiene. Subsequently, the reactor was held at 10°C, charged with 0.1 parts of cumene hydroperoxide (polymerization initiator) and suitable amounts of a reductant and a chelating agent, the polymerization reaction was allowed to proceed with stirring, and when the polymerization conversion ratio reached 90%, 0.1 parts of a hydroquinone aqueous solution (polymerization terminator) having a concentration of 10% by weight was added to terminate the polymerization reaction. Subsequently, the residual monomers were removed at a water temperature of 60°C to afford a copolymer latex (solids content: 30% by weight).

Next, the copolymer latex and a palladium catalyst (a solution prepared by mixing a 1% by weight palladium acetate solution in acetone and the same amount (by weight) of ion exchanged water) were placed in an autoclave such that the palladium content with respect to the dry weight of the rubber contained in the copolymer latex obtained above was 2,000 ppm by weight, and were subjected to a hydrogen addition reaction at a hydrogen pressure of 3 MPa at 50°C for 6 hours to yield a carboxyl group-containing nitrile rubber (A-6) latex.

An aqueous solution of sodium chloride (coagulant concentration: 25% by weight) was prepared as a coagulating solution in a tank. The latex was slowly poured into the tank, then coagulated by vigorous contact mixing, subsequently filtered to isolate a solid material (crumbs). The solid material was dried under vacuum at 60°C for 12 hours to yield a solid carboxyl group-containing nitrile rubber (A-6). The monomer composition of the carboxyl group-containing nitrile rubber (A-6) approximately corresponded to the amounts of the monomers used.

### (Preparation of cross-linkable rubber composition for pulse NMR analysis and cross-linkable rubber composition for evaluation of physical properties)

A cross-linkable rubber composition for pulse NMR analysis and a cross-linkable rubber composition for evaluation of physical properties were prepared as in Example 2 except that 100 parts of the carboxyl group-containing nitrile rubber (A-6) obtained above was used instead of the carboxyl group-containing acrylic rubber (A-1), and evaluations were performed in the same manner as above. The results are shown in Table 1.

### <Example 10>

### (Production of carboxyl group-containing acrylic rubber (A-7))

46.294 parts of ion exchanged water, as a monomer component, 47.4 parts of ethyl acrylate, 49.8 parts of n-butyl acrylate, 2.8 parts of mono-n-butyl fumarate, and 1.8 parts of sodium tridecyloxyhexa(oxyethylene)phosphate ester (anionic emulsifier) as an emulsifier were placed into a mixing vessel provided with a homomixer, and stirred to prepare a monomer emulsion. In Example 10, no molecular weight modifier such as tert-dodecyl mercaptan was used.

In the next step, 170.853 parts of pure water and 2.962 parts of the monomer emulsion prepared above were placed into a polymerization reaction vessel provided with a thermometer and a stirrer, and were cooled to 12°C under a nitrogen stream. Subsequently, 145.132 parts of the monomer emulsion prepared above, 0.00033 parts of ferrous sulfate (reductant), 0.264 parts of sodium ascorbate (reductant), and 7.72 parts (0.22 parts in terms of potassium persulfate) of 2.85% by weight potassium persulfate aqueous solution (polymerization initiator) were continuously added dropwise to a polymerization reaction vessel over 3 hours while the temperature was kept at 12°C. Subsequently, the reaction was continued for one hour in the state where the inner temperature of the polymerization reaction vessel was kept at 23°C. After it was checked that the polymerization conversion ratio reached approximately 100%, the polymerization reaction was stopped by adding hydroquinone as a polymerization terminator to prepare a polymer emulsion.

Independently, 50 parts of sodium tridecyloxyhexa(oxyethylene)phosphate ester (anionic emulsifier) as an aqueous solution having a concentration of 12% by weight, 25 parts of 2,2'-methylenebis(4-methyl-6-tert-butylphenol) (trade name "NOCRAC NS-6", available from Ouchi Shinko Chemical Industrial Co., Ltd., a bisphenol antioxidant), and 25 parts of 2-mercaptobenzimidazole (trade name "NOCRAC MB", available from Ouchi Shinko Chemical Industrial Co., Ltd., a benzimidazole antioxidant) were mixed and stirred at a temperature of 25°C to prepare an antioxidant dispersion (concentration of sodium tridecyloxyhexa(oxyethylene)phosphate ester as an emulsifier: 6% by weight, concentration of antioxidants: 50% by weight).

In the next step, to 100 parts of the polymer emulsion obtained above (temperature: 25°C), 1.44 parts of the antioxidant dispersion prepared above (i.e., each antioxidant was 2.0 parts relative to 100 parts of the rubber component in the polymer emulsion) was added, followed by stirring.

Subsequently, 60 parts of 30% by weight magnesium sulfate aqueous solution adjusted to 85°C was placed into a coagulation vessel provided with a thermometer and a stirrer, followed by stirring with a stirring blade in the state where the system was heated to 85°C. Under stirring, 100 parts of the polymer emulsion prepared above was continuously added to the magnesium sulfate aqueous solution to coagulate the polymer, which was filtered to obtain hydrous crumbs.

In the next step, 388 parts of industrial water was added to 100 parts of the solids content of the hydrous crumbs obtained above, followed by stirring at room temperature for 5 minutes in the coagulation vessel, and the water was drained from the coagulation vessel to perform water-washing of the hydrous crumbs. The water-washed hydrous crumbs were dried with a hot air dryer at 110°C for one hour to yield a solid carboxyl group-containing acrylic rubber (A-7) with a recovery rate of 100%. The carboxyl group-containing acrylic rubber (A-7) contained 2 parts of 2,2'-methylenebis(4-methyl-6-tert-butylphenol) and 2 parts of 2-mercaptobenzimidazole relative to 100 parts of the rubber component.

### (Preparation of cross-linkable rubber composition for pulse NMR analysis and cross-linkable rubber composition for evaluation of physical properties)

A cross-linkable rubber composition for pulse NMR analysis and a cross-linkable rubber composition for evaluation of physical properties were prepared as in Example 1 except that 100 parts (as the amount of the rubber component compounded) of the carboxyl group-containing acrylic rubber (A-7) obtained above was used instead of the carboxyl group-containing acrylic rubber (A-1), and 2,2'-methylenebis(4-methyl-6-tert-butylphenol) and 2-mercaptobenzimidazole were not compounded, and evaluations were performed in the same manner as above. The results are shown in Table 1.

### <Comparative Example 1>

### (Preparation of cross-linkable rubber composition for pulse NMR analysis and cross-linkable rubber composition for evaluation of physical properties)

A cross-linkable rubber composition for pulse NMR analysis and a cross-linkable rubber composition for evaluation of physical properties were prepared as in Example 4 except that 2,2'-methylenebis(4-methyl-6-tert-butylphenol) and 2-mercaptobenzimidazole were not compounded, and 2 parts of 4,4'-bis(α,α-dimethylbenzyl)diphenylamine (trade name "NOCRAC CD", available from Ouchi Shinko Chemical Industrial Co., Ltd., an amine antioxidant) was used instead, and evaluations were performed in the same manner as above. The results are shown in Table 1.

### <Comparative Example 2>

### (Preparation of carboxyl group-containing acrylic rubber (A-8))

A solid carboxyl group-containing acrylic rubber (A-8) was obtained by performing polymerization, coagulation, water-washing, and drying as in Example 1 except that, as a monomer, the amount of ethyl acrylate used was 48.8 parts, the amount of mono-n-butyl fumarate used was 1.4 parts, 49.8 parts of methyl acrylate was used instead of n-butyl acrylate, and 0.05 parts of tert-dodecyl mercaptan was additionally used as a molecular weight modifier in the preparation of the monomer emulsion.

### (Preparation of cross-linkable rubber composition for pulse NMR analysis and cross-linkable rubber composition for evaluation of physical properties)

A cross-linkable rubber composition for pulse NMR analysis and a cross-linkable rubber composition for evaluation of physical properties were prepared as in Comparative Example 1 except that 100 parts of the carboxyl group-containing acrylic rubber (A-8) obtained above was used instead of the carboxyl group-containing acrylic rubber (A-3), and evaluations were performed in the same manner as above. The results are shown in Table 1.

### <Comparative Example 3>

### (Preparation of carboxyl group-containing acrylic rubber (A-9))

A solid carboxyl group-containing acrylic rubber (A-9) was obtained by performing polymerization, coagulation, water-washing, and drying as in Example 1 except that, as a monomer, the amount of ethyl acrylate used was 47.4 parts, the amount of n-butyl acrylate used was 49.8 parts, the amount of mono-n-butyl fumarate used was 2.8 parts, and 0.05 parts of tert-dodecyl mercaptan was additionally used as a molecular weight modifier in the preparation of the monomer emulsion.

### (Preparation of cross-linkable rubber composition for pulse NMR analysis and cross-linkable rubber composition for evaluation of physical properties)

A cross-linkable rubber composition for pulse NMR analysis and a cross-linkable rubber composition for evaluation of physical properties were prepared as in Comparative Example 1 except that 100 parts of the carboxyl group-containing acrylic rubber (A-9) obtained above was used instead of the carboxyl group-containing acrylic rubber (A-3) and the amount of hexamethylenediamine carbamate used was 1.2 parts, and evaluations were performed in the same manner as above. The results are shown in Table 1.

### [Table 1]

**Table 1**

| | | | | Examples | | | | | | | | | | Comparative Examples | | |
|---|---|---|---|---|---|---|---|---|---|---|---|---|---|---|---|---|
| | | | | 1 | 2 | 3 | 4 | 5 | 6 | 7 | 8 | 9 | 10 | 1 | 2 | 3 |
| Types of rubber | | | | (A-1) | (A-1) | (A-2) | (A-3) | (A-3) | (A-3) | (A-4) | (A-5) | (A-6) | (A-7) | (A-3) | (A-8) | (A-9) |
| Monomer composition | | Ethyl acrylate | (Parts) | 48.1 | 48.1 | 48.8 | 48.8 | 48.8 | 48.8 | 48.8 | 48.1 | 0 | 47.4 | 48.8 | 48.8 | 48.1 |
| | | n-Butyl acrylate | (Parts) | 49.1 | 49.1 | 49.8 | 49.8 | 49.8 | 49.8 | 24.8 | 49.1 | 30 | 49.8 | 49.8 | 0 | 49.1 |
| | | Methyl acrylate | (Parts) | 0 | 0 | 0 | 0 | 0 | 0 | 25 | 0 | 0 | 0 | 0 | 49.8 | 0 |
| | | Acrylonitrile | (Parts) | 0 | 0 | 0 | 0 | 0 | 0 | 0 | 0 | 21.8 | 0 | 0 | 0 | 0 |
| | | 1,3-Butadiene | (Parts) | 0 | 0 | 0 | 0 | 0 | 0 | 0 | 0 | 45.2 | 0 | 0 | 0 | 0 |
| | | Mono-n-butyl fumarate | (Parts) | 2.8 | 2.8 | 1.4 | 1.4 | 1.4 | 1.4 | 1.4 | 0 | 0 | 2.8 | 1.4 | 1.4 | 2.8 |
| | | Monocyclohexyl fumarate | (Parts) | 0 | 0 | 0 | 0 | 0 | 0 | 0 | 2.8 | 0 | 0 | 0 | 0 | 0 |
| | | Mono-n-butyl maleate | (Parts) | 0 | 0 | 0 | 0 | 0 | 0 | 0 | 0 | 3 | 0 | 0 | 0 | 0 |
| Molecular weight modifier | | t-Dodecyl mercaptan | (Parts) | 0 | 0 | 0 | 0.05 | 0.05 | 0.05 | 0.05 | 0 | 0.2 | 0 | 0.05 | 0.05 | 0.05 |

| Formulation of cross-linkable rubber composition for pulse NMR analysis | | | | | | | | | | | | | | | | |
|---|---|---|---|---|---|---|---|---|---|---|---|---|---|---|---|---|
| | Rubber component | | (Parts) | 100 | 100 | 100 | 100 | 100 | 100 | 100 | 100 | 100 | 100 | 100 | 100 | 100 |
| | 2,2'-Methylenebis(4-methyl-6-tert-butylphenol) | | (Parts) | 2 | 2 | 2 | 2 | 2 | 0 | 2 | 2 | 2 | 0 | 0 | 0 | 0 |
| | 2-Mercaptobenzimidazole | | (Parts) | 2 | 2 | 2 | 2 | 0 | 2 | 2 | 2 | 2 | 0 | 0 | 0 | 0 |
| | 4,4'-Bis(α,α-dimethylbenzyl)diphenylamine | | (Parts) | 0 | 0 | 0 | 0 | 0 | 0 | 0 | 0 | 0 | 0 | 2 | 2 | 2 |
| | Hexamethylenediamine carbamate | | (Parts) | 1.2 | 1.2 | 0.6 | 0.6 | 0.6 | 0.6 | 0.6 | 1.2 | 1.2 | 1.2 | 0.6 | 0.6 | 1.2 |

| Formulation of cross-linkable rubber composition for evaluation of physical properties | | | | | | | | | | | | | | | | |
|---|---|---|---|---|---|---|---|---|---|---|---|---|---|---|---|---|
| | Rubber component | | (Parts) | 100 | 100 | 100 | 100 | 100 | 100 | 100 | 100 | 100 | 100 | 100 | 100 | 100 |
| | 2,2'-Methylenebis(4-methyl-6-tert-butylphenol) | | (Parts) | 2 | 2 | 2 | 2 | 2 | 0 | 2 | 2 | 2 | 0 | 0 | 0 | 0 |
| | 2-Mercaptobenzimidazole | | (Parts) | 2 | 2 | 2 | 2 | 0 | 2 | 2 | 2 | 2 | 0 | 0 | 0 | 0 |
| | 4,4'-Bis(α,α-dimethylbenzyl)diphenylamine | | (Parts) | 0 | 0 | 0 | 0 | 0 | 0 | 0 | 0 | 0 | 0 | 2 | 2 | 2 |
| | Carbon black | | (Parts) | 50 | 60 | 60 | 60 | 60 | 60 | 60 | 60 | 60 | 50 | 60 | 60 | 60 |
| | Hexamethylenediamine carbamate | | (Parts) | 12 | 12 | 0.6 | 0.6 | 0.6 | 0.6 | 0.6 | 12 | 12 | 12 | 0.6 | 0.6 | 1.2 |

| Pulse NMR analysis | | | | | | | | | | | | | | | | |
|---|---|---|---|---|---|---|---|---|---|---|---|---|---|---|---|---|
| | Sum of intensities after high temperature storage (storage at 150°C for 1008 hours) | | | 17.3 | 17.3 | 18.7 | 18.8 | 18.9 | 18.9 | 18.7 | 17.5 | 17.4 | 17.3 | 21.3 | 19.5 | 20.0 |
| | Sum of intensities before high temperature storage | | | 16.5 | 16.5 | 18.4 | 18.6 | 18.6 | 18.6 | 18.1 | 16.6 | 15.9 | 16.5 | 18.4 | 17.6 | 16.5 |

| Evaluations | | | | | | | | | | | | | | | | |
|---|---|---|---|---|---|---|---|---|---|---|---|---|---|---|---|---|
| | Hardness (DuroA) | | | 65 | 75 | 65 | 65 | 65 | 65 | 74 | 76 | 78 | 65 | 65 | 83 | 65 |
| | Compressive stress relaxation index | | | 0.59 | 0.52 | 0.49 | 0.46 | 0.40 | 0.40 | 0.49 | 0.51 | 0.49 | 0.59 | 0.22 | 0.30 | 0.28 |
| | Low temperature sealing property (TR10 in 50% elongated state) | | (°C) | 30 | -29 | 30 | 30 | 30 | 30 | -15 | -29 | -27 | 30 | 30 | 2 | 30 |

In Example 10, 2,2'-methylenebis (4-mathyl-6-tert-butylphenol) and 2-mercaptobenzimidazole were compounded with the carboxyl group- containing acrylic rubber (A-7) latex.

As shown in Table 1, when the sum of intensities within a region of 0 to 8 msec in relaxation time obtained by pulse NMR analysis performed on the cross-linked rubbers after high temperature storage at 150°C for 1008 hours was 19.0 or less, the resulting cross-linked rubbers had a low TR10 in the evaluation of low-temperature sealing properties, which means superior low-temperature properties, and a high a compressive stress relaxation index, which means superior compressive stress relaxation properties (Examples 1 to 10).

On the other hand, when the sum of intensities within a region of 0 to 8 msec in relaxation time obtained by pulse NMR analysis performed on the cross-linked rubbers after high temperature storage at 150°C for 1008 hours was more than 19.0, the resulting cross-linked rubbers had a low compressive stress relaxation index, which means inferior compressive stress relaxation properties (Comparative Examples 1 to 3).

## Claims

1. A cross-linkable rubber comprising a rubber component having a carboxyl group as a cross-linkable group,
wherein when the cross-linkable rubber is cross-linked to produce a cross-linked rubber before high temperature storage and the cross-linked rubber before high temperature storage is subjected to high temperature storage at 150°C for 1008 hours to produce a cross-linked rubber after high temperature storage, the sum of intensities within a region of 0 to 8 msec in relaxation time obtained by pulse NMR analysis performed on the cross-linked rubber after high temperature storage is 19.0 or less.

2. The cross-linkable rubber according to claim 1, wherein the sum of intensities within a region of 0 to 8 msec in relaxation time obtained by pulse NMR analysis performed on the cross-linked rubber after high temperature storage is 17.0 to 18.0.

3. The cross-linkable rubber according to claim 1 or 2, wherein when the cross-linkable rubber is cross-linked to produce a cross-linked rubber before high temperature storage, the sum of intensities within a region of 0 to 8 msec in relaxation time obtained by pulse NMR analysis performed on the cross-linked rubber before high temperature storage is 19.0 or less.

4. The cross-linkable rubber according to claim 3, wherein the sum of intensities within a region of 0 to 8 msec in relaxation time obtained by pulse NMR analysis performed on the cross-linked rubber before high temperature storage is 15.0 to 17.0.

5. The cross-linkable rubber according to any one of claims 1 to 4, wherein conditions for performing the pulse NMR analysis are as follows:
Measurement time: 0 to 8 msec
Interval between the 90-degree pulse and the 180-degree pulse in initial measurement: 0.04 msec
Interval between the 90-degree pulse and the 180-degree pulse in final measurement: 4 msec
Total number of measurements: 30 times
Timing of n-th measurement, Tₙ: Tₙ₋₁ + 0. 08 × (DF)ⁿ⁻¹ + C [msec], where Tₙ [msec] refers to the timing of the n-th measurement represented by a time elapsed from the start of the measurement, T₀ = 0 [msec], DF refers to a coefficient that defines the timing of measurement calculated by a formula "DF = exp (1/(total number of measurements - 1) * ln (interval between 90-degree pulse and 180-degree pulse in final measurement/interval between 90-degree pulse and 180-degree pulse in initial measurement))", and C refers to a correction factor [msec].

6. The cross-linkable rubber according to any one of claims 1 to 5, wherein the rubber component is a carboxyl group-containing acrylic rubber.

7. The cross-linkable rubber according to claim 6, wherein the carboxyl group-containing acrylic rubber contains 50 to 99.9% by weight of an (meth)acrylic acid ester monomer unit and 0.1 to 10% by weight of a carboxyl group-containing monomer unit.

8. The cross-linkable rubber according to any one of claims 1 to 5, wherein the rubber component is a carboxyl group-containing nitrile rubber.

9. The cross-linkable rubber according to claim 8, wherein the carboxyl group-containing nitrile rubber contains 5 to 60% by weight of an α,β-ethylenically unsaturated nitrile monomer unit, 10 to 80% by weight of a conjugated diene monomer unit, 1 to 30% by weight of a carboxyl group-containing monomer unit, and 10 to 50% by weight of an α,β-ethylenically unsaturated monocarboxylic acid ester monomer unit.

10. The cross-linkable rubber according to any one of claims 1 to 9, wherein the cross-linkable rubber contains a bisphenol antioxidant and/or a benzimidazole antioxidant.

11. A cross-linked rubber obtained by cross-linking the cross-linkable rubber according to any one of claims 1 to 10.

12. A method for producing the cross-linkable rubber according to claim 10, the method comprising a step of kneading the rubber component with the bisphenol antioxidant and/or the benzimidazole antioxidant using a kneader.

13. A method for producing the cross-linkable rubber according to claim 10, the method comprising a step of adding the bisphenol antioxidant and/or the benzimidazole antioxidant to a latex containing the rubber component, and thereafter causing coagulation of the latex.
